Europäisches Patentamt

European Patent Office

Office européen des brevets

(11) Numéro de publication: **0 417 713 A1**

## (12) DEMANDE DE BREVET EUROPEEN

(21) Numéro de dépôt: 90117432.6

(22) Date de dépôt: **10.09.90**

(51) Int. Cl.5: **H01B 7/28**, A01N 25/10, C08K 5/16

(30) Priorité: 13.09.89 FR 8911968

(43) Date de publication de la demande: **20.03.91 Bulletin 91/12**

(84) Etats contractants désignés: **BE CH DE DK FR GB IT LI**

(71) Demandeur: **ALCATEL CABLE**
**30, rue des Chasses**
**F-92111 Clichy Cédex(FR)**
(84) **CH DE DK FR GB IT LI**

Demandeur: **ALCATEL N.V.**
**Strawinskylaan 341**
**NL-1077 XX Amsterdam(NL)**
(84) **BE**

(72) Inventeur: **Demay, Jean-Noel**
**44, rue du Py**
**F-69390 Vernaison(FR)**
Inventeur: **Perriere, Eric**
**185, avenue Berthelot**
**F-69007 Lyon(FR)**

(74) Mandataire: **Weinmiller, Jürgen et al**
**Lennéstrasse 9 Postfach 24**
**W-8133 Feldafing(DE)**

(54) Câble électrique à gaine externe en mélange polymère contenant un agent insecticide.

(57) Le câble est à gaine externe en mélange polymère mis en oeuvre à une température au plus égal à 200°C, répulsif à l'égard des insectes et insecticide.

Il est caractérisé en ce que le mélange polymère contient une dose efficace, mais non nocive pour l'homme, de préférence 0,001 % à 0,1 %, de deltaméthrine.

EP 0 417 713 A1

## CÂBLE ÉLECTRIQUE À GAINE EXTERNE EN MÉLANGE POLYMÈRE CONTENANT UN AGENT INSECTICIDE

La présente invention concerne un câble à gaine externe en mélange polymère vulcanisable ou extrudable ou injectable à une température au plus égale à 200°C, répulsif à l'égard des insectes et insecticide, notamment vis-à-vis des termites.

On cherche à protéger des attaques des insectes des mélanges polymères pour certaines applications, et notamment pour gaines de câbles électriques, notamment vis-à-vis des termites. On incorpore jusqu'à présent à cet effet aux mélanges polymères un insecticide des types connus sous les marques "Lindane", "Aldrin" ou "Dieldrin", additionnés au mélange polymère à l'état pur ou par l'intermédiaire d'un mélange maître. Mais ces insecticides très efficaces ne sont pas sans danger pour l'homme, notamment au cours des opérations de mélange, de vulcanisation ou d'extrusion d'une gaine autour d'un câble.

Il existe déjà par ailleurs de nombreuses matières insecticides qui sont incorporées au bois ou à la laine pour leur protection. Ces matières sont des produits peu stables au température. Pour les utilisations visées ci-avant, elles sont employées à température ambiante, pour laquelle elles restent stables, en général sous forme d'aérosol ou mélangées à des solvants ou à des peintures.

La présente invention a pour but de procurer un mélange polymère répulsif à l'égard des insectes et insecticide utilisable pour la confection des gaines externes de câbles, qui ne présente pas de danger pour l'homme, tout en conservant une efficacité tout à fait satisfaisante.

L'invention a pour objet un câble électrique résistant aux insectes, notamment aux termites, à gaine externe en polymère vulcanisable ou thermoplastique contenant un agent insecticide, caractérisé en ce que ledit agent insecticide est constituée d'une dose efficace, mais non nocive pour l'homme, de 0,001 % à 0,1 % en poids, de delta-méthrine incorporée dans le mélange polymère, ainsi mis en oeuvre à une température de l'ordre de 200°C.

De telles gaines peuvent notamment être en poly-chlorure de vinyle ou en élastomère thermoplastique tel qu'un copolymère d'éthylène et d'acrylate de vinyle, ou tout autre polymère susceptible d'être traité à une température d'au plus 200°C.

La delta-méthrine est classée comme simplement irritante pour l'homme (tableau C). Utilisée comme additif au mélange polymère de gaine des câbles, elle reste stable lors de la confection de la gaine, effectuée à une température allant jusqu'à 200°C, et possède une faible volatilité. La gaine résultante est ainsi, par nature, protégée contre l'attaque d'insectes, notamment de termites.

On a effectué des essais d'incorporation de delta-méthrine à la dose de 0,001 % dans un mélange à base de poly-chlorure de vinyle. Des plaques en ce mélange ont été soumises à des essais d'attaque par les termites suivant la norme NFX-41539. Ces essais ont donné des résultats tout à fait favorables. En pratique des doses allant jusqu'à 0,1 % sont également utilisables sans danger pour l'homme.

## Revendications

1/ Câble électrique résistant aux insectes, et notamment aux termites, à gaine externe en polymère mise en oeuvre à une température au plus égale à 200°C, contenant un agent insecticide, caractérisé en ce que ledit agent insecticide est de la delta-méthrine incorporée audit mélange polymère, en dose efficace, mais non nocive pour l'homme, pouvant représenter environ 0,001 % en poids, dans ledit mélange polymère.

2 / Câble électrique selon revendication 1, caractérisé en ce que ladite gaine contient de 0,1 % à 0,001 % en poids de delta-méthrine.

Office européen
des brevets

**RAPPORT DE RECHERCHE
EUROPEENNE**

Numéro de la demande

**EP 90 11 7432**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | GB-A-1 538 222 (BICC LTD.)<br>* le document en entier *<br><br>— — — | 1-2 | H 01 B 7/28<br>A 01 N 25/10<br>C 08 K 5/16 |
| Y | CHEMICAL ABSTRACTS, vol. 105, no. 19, 10 novembre 1986 Columbus, Ohio, USA<br>& HU-A-38 205 (I. TOTH et al.) 28-05-1984<br>* abrégé *<br><br>— — — — — | 1-2 | |

**DOMAINES TECHNIQUES RECHERCHES (Int. Cl.5)**

A 01 N
H 01 B
C 08 K
C 08 L

Le présent rapport de recherche a été établi pour toutes les revendications

| Lieu de la recherche | Date d'achèvement de la recherche | Examinateur |
|---|---|---|
| La Haye | 21 novembre 90 | DE LOS ARCOS Y VELAZ |